# EUROPEAN PATENT SPECIFICATION

(11) **EP 1 563 728 B1**
(45) Date of publication and mention of the grant of the patent: **07.06.2006**
(21) Application number: 04075458.2
(22) Date of filing: 13.02.2004
(51) Int. Cl.: A01K 1/015

(54) **Method for the realisation of concrete grids for stable floors for cattle and the like.**
Verfahren zur Herstellung von Betonlängsspaltenrostelementen für Stallanlagenfussboden für Vieh und dergleichen
Procédé de fabrication des éléments de caillebotis en beton pour plancher d'étable pour le bétail et similaire

(43) Date of publication of application: 17.08.2005
(73) Proprietor: VAN DER VELDEN BETON, naamloze vennootschap, 2321 Hoogstraten - Meer (BE)
(72) Inventor: Van Der Velden, Jan, 2321 Hoogstraten - Meer (BE)
(74) Representative: Donné, Eddy

(56) References cited:
- DE-U- 8 610 224
- DE-U- 20 112 280
- GB-A- 740 861
- GB-A- 1 395 303
- GB-A- 2 327 635
- US-A- 5 133 915
- US-A- 6 071 458

## Description

The present invention concerns a method for the realisation of concrete grids for stable floors for cattle and the like, in particular a method for the realisation of such grids in concrete.

It is known that such grids in general consist of girders which are connected to each other at regular distances. These grids are usually installed above a receiving well so that the excrements of the cattle or other animals fall in the receiving well through passages in the grids.

The almost immediate removal of the excrements guarantees a cleaner floor for the cattle.

However, the problem arising is that after some time a shiny layer is formed on the upper surface of the grids, thus strongly increasing the chance of slipping.

Said shiny layer can only be removed by mechanically scraping off, roughening or grinding of the concrete grids which is an expensive treatment.

This way, grids for stable floors for cattle are obtained as for example disclosed in DE 8.610.224.

Furthermore, in this way the edges of the girders of the grid are often damaged as a result of which sharp edges occur that might injure the cattle.

Finally, due to this treatment the stable cannot be used for some time.

Furthermore, during these treatments additional irregularities are mostly caused in the upper surface of the grid, for example grooves.

According to a known process as described in GB 2.327.635, such concrete grids for stable floors for cattle are manufactured by pouring concrete in a mould whereby the top surface of the concrete is scored, for example by drawing a coarse brush across the top surface thus roughening the top surface while the concrete is in the mould.

A known method for shaping and smoothening of concrete surfaces is disclosed in US 6.071.458 and relates to the manufacturing of horizontally pre-cast panels of mouldable material. According to this method, wet concrete is poured into a casting form having elongate side rails; an elongate roller having a shaped forming surface is supported on said side rails of the casting form; the elongate roller is driven across a surface of the wet concrete.

The present invention aims to offer a solution for the aforementioned and other disadvantages.

To this end, the invention concerns a method for the realisation of prefabricated grids in concrete, for stable floors for cattle and the like, which are mainly formed by grids connected to each other, whereby the method consists in the forming of the grid by the pouring of concrete in a suitable mould, and subsequently followed by the curing of the concrete, whereby during the curing process, and before taking the grids into use, irregularities are made in at least one part of the upper surface of the girders, whereby the irregularities mainly consist of grooves and whereby the irregularities are made after partial curing of the concrete and the removal of the grid from the mould.

An important advantage thus achieved is that for making the irregularities considerably less energy is needed than when such irregularities must be made in protractedly cured grids, as was the case before.

The irregularities preferably consist mainly of grooves that run parallel to the girders of the grid, which offers the advantage of a simple application, if necessary with the help of a tool.

According to a special application of the method according to the invention, irregularities are made up to a distance from the edges of the girders.

The advantage of this is that in this way the edges of the aforementioned girders remain smooth and do not display any sharp edges.

Furthermore, it is possible to provide the irregularities with a protective layer, for example on the basis of epoxy and silicones, which prevents dirt from attaching to these irregularities.

In order to better explain the characteristics of the invention, a preferred embodiment of the method for the realisation of a grid according to the invention is described hereinafter as an example only without being limitative in any way, with reference to the accompanying drawings, in which:
Figure 1 represents a schematic view and cross section of a partial stable floor which is realised with grids according to the invention;
Figure 2 represents a view from above of figure 1;
Figure 3 represents a cross section according to line III-III in figure 2;
Figure 4 represents a side view of a grid according to the invention;
Figure 5 represents a schematic representation of the method according to the invention;
Figure 6 represents an alternative of the method according to figure 5;
Figure 7 represents on a larger scale the part indicated in figure 6 by F7;
Figure 8 represents a cross section according to line VIII-VIII in figure 7.

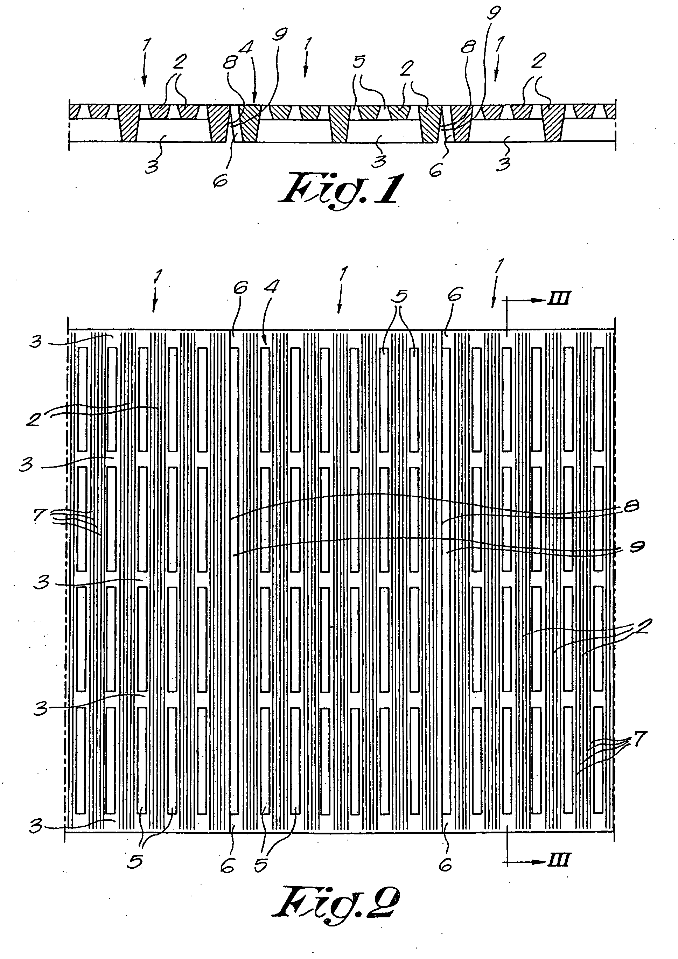

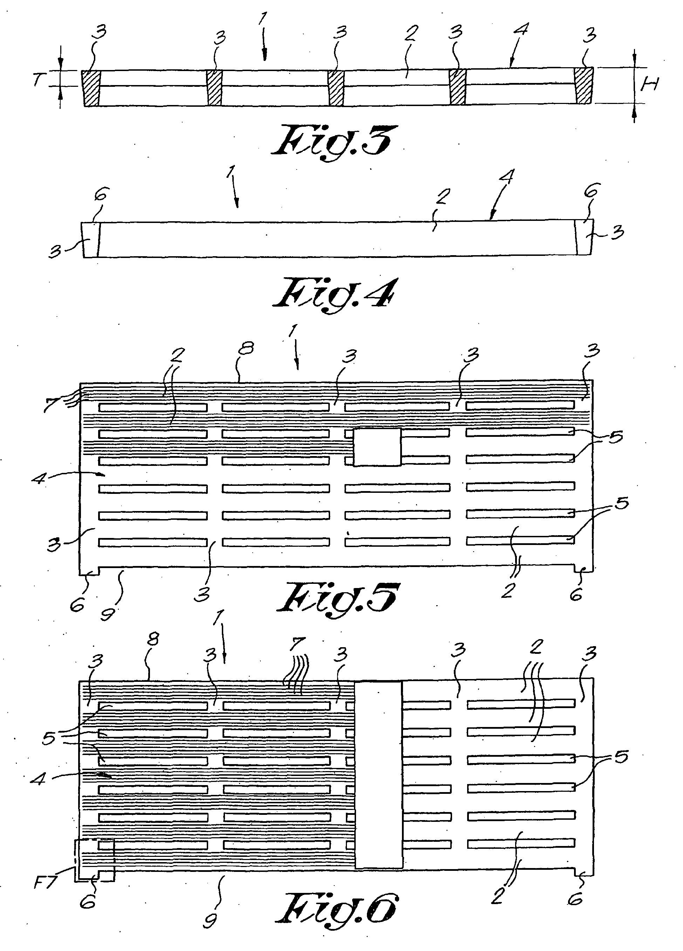

In figure 1, a part of a stable floor is represented, which is formed by grids 1 which are achieved by the method according to the invention.

Each grid 1 consists mainly of different girders 2 which are mutually connected to each other by means of cross girders 3.

In the represented embodiment seven girders 2 provided with trapezoidal cross section, which are connected to each other parallel and at a distance from each other, and with their widest base in the same plane, in particular in the upper surface 4 of the grid 1, are connected to each other by means of five girders 3 which preferably display a trapezoidal cross section.

In this way in between the girders 2 of a grid 1 passages 5 are formed.

As shown in the figures, the cross girders 3, and also the centre and two outer girders 2 have a height H which is larger than the height T of the intermediate girders 2.

The two outside cross girders 3 extend at one end past the outside girder 2 of the grid 1, thus forming there two projections 6.

The upper surface 4 of a grid 1 is according to the invention after the pouring thereof and before taking into use and before the concrete has been cured for a long period of time, provided with irregularities, in this case grooves 7 which extend lengthwise along the grid 1 up to a distance from the side edges of the girders 2 and of the outside cross girders 3.

The realisation of a stable floor by means of the grids 1 described before, is very simple and as follows.

The grids 1 are for example put with their outside cross girders 3 next to each other on the side walls of a receiving well, whereby the projections 6 of each grid 1 fit to the flat side edge 8 of an adjacent grid 1, whereby in between the adjacent grids 1 grooves 9 are formed.

In this way a stable floor is created provided in between not only with the passages 5, but also with the grooves 9.

The aforementioned passages 5 and the grooves 9 allow for the excrements of the cattle or the like to automatically fall in the receiving well, with the advantage that the cattle can move over a cleaner and safer floor.

According to the invention, the grids 1 are realised in moulds in which if necessary a reinforcement is provided.

When the concrete has at least partially been cured, for example after one day, the grooves 7 are made in the upper surface 4.

These grooves 7 can for example be made by treatment, for example cutting, milling or grinding of the upper surface 4 of the partially cured grid 1 with the help of a device that is not represented and that for example consists of a driven axle onto which cams are provided, that can suitably act on the aforementioned upper surface 4 in order to provide irregularities, for example grooves 7.

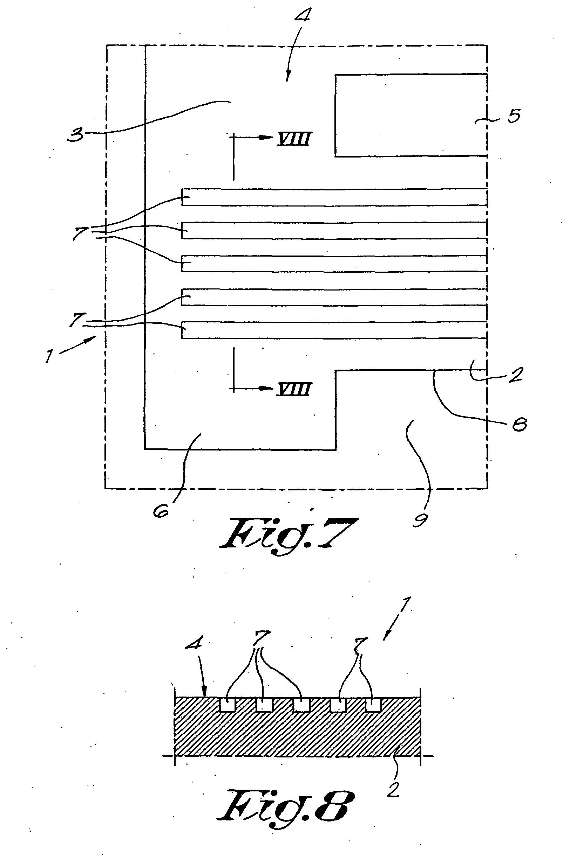

As represented in figure 5 the grooves 7 are provided by treating the partially cured concrete according to the lengthy direction of the grid 1, in this case the direction of the girders 2.

This can be realised per separate girder 2 or grouped, for example per grid 1 in its totality, as represented in figure 6.

The irregularities, in this case the grooves 7, are made up to a distance from the side edges of the girders 2 and of the cross girders 3, in order to prevent that sharp edges occur which might injure the cattle.

After the grooves have been made, they can be provided with a protective layer on the basis of epoxy, silicones or the like.

Although the half finished grids 1 are removed as soon as possible after partial curing from the mould, it is possible but not according to the invention to make the irregularities and if necessary to apply a protective layer while the half finished grid 1 is still partially or completely in the mould.

Preferably, the irregularities are made within one year after the pouring of the grid 1, and preferably within one month or even within a couple of days after the pouring of the concrete.

The invention is by no means limited to the above-described method, but can be realised in all sorts of variants without departing from the scope of the invention as defined in the appended claims.

## Claims

1. Method for the realisation of prefabricated grids in concrete, for stable floors for cattle and the like, which mainly consist of mutually connected girders (2), whereby this method consists of forming the grid (1) by pouring concrete in a suitable mould, and subsequently by letting the concrete cure, whereby during the curing process, and before taking the grids into use, irregularities are made in at least one part of the upper surface of the girders, **characterised in that** the irregularities mainly consist of grooves (7) and that the irregularities are made after partial curing of the concrete and the removal of the grid (1) from the mould.

2. Method according to claim 1, **characterised in that** the irregularities are made by treating the partially cured grids (1).

3. Method according to claim 1, **characterised in that** the irregularities mainly consist of grooves (7) which run mainly parallel to the girders (2).

4. Method according to claim 3, **characterised in that** the grooves (7) are made by means of a device with cams which are moveably connected to a driven axle.

5. Method according to claim 1, **characterised in that** before the pouring of the concrete, suitable reinforcements are provided in the mould.

6. Method according to claim 1, **characterised in that** the irregularities are made up to a distance from the edges of the girders (2).

7. Method according to claim 1, **characterised in that** the irregularities are provided with a protective layer.

8. Method according to claim 7, **characterised in that** the protective layer contains epoxy.

9. Method according to claim 7, **characterised in that** the protective layer contains silicones.

10. Method according to claim 1 or 2, **characterised in that** the irregularities are made within a period of one year at the most following the pouring of the concrete and before taking the grid (1) into use.

11. Method according to claim 1 or 2, **characterised in that** the irregularities are made within a period of one month at the most after the pouring of the concrete and before taking the grid (1) into use.

12. Method according to claim 1 or 2, **characterised in that** irregularities are made within a period of two days at the most after the pouring of the concrete and before taking the grid (1) into use.

## Patentansprüche

1. Verfahren zur Herstellung vorgefertigter Längsspaltenrostelemente aus Beton, für Stallanlagenfußböden für Vieh und dergleichen, die hauptsächlich aus miteinander verbundenen Tragbalken (2) bestehen, wobei dieses Verfahren aus dem Formen des Längsspaltenrostelements (1) durch Gießen von Beton in eine geeignete Gussform, und anschließend Aushärtenlassen des Betons besteht, wobei während des Aushärtevorgangs, und vor Ingebrauchnahme der Längsspaltenrostelemente, Unregelmäßigkeiten in wenigstens einem Teil der Oberfläche der Tragbalken hergestellt werden, **dadurch gekennzeichnet, dass** die Unregelmäßigkeiten hauptsächlich aus Rillen (7) bestehen und dass die Unregelmäßigkeiten nach dem teilweisen Aushärten des Betons und dem Entfernen des Längsspaltenrostelements (1) aus der Gussform hergestellt werden.

2. Verfahren gemäß Anspruch 1, **dadurch gekennzeichnet, dass** die Unregelmäßigkeiten durch Behandeln der teilweise ausgehärteten Längsspaltenrostelemente (1) hergestellt werden.

3. Verfahren gemäß Anspruch 1, **dadurch gekennzeichnet, dass** die Unregelmäßigkeiten hauptsächlich aus Rillen (7) bestehen, die hauptsächlich parallel zu den Tragbalken (2) verlaufen.

4. Verfahren gemäß Anspruch 3, **dadurch gekennzeichnet, dass** die Rillen (7) mittels einer Vorrichtung mit Nocken, die bewegbar mit einer angetriebenen Achse verbunden sind, hergestellt werden.

5. Verfahren gemäß Anspruch 1, **dadurch gekennzeichnet, dass** vor dem Gießen des Betons geeignete Verstärkungen in der Gussform angebracht werden.

6. Verfahren gemäß Anspruch 1, **dadurch gekennzeichnet, dass** die Unregelmäßigkeiten bis zu einem Abstand von den Rändern der Tragbalken (2) hergestellt werden.

7. Verfahren gemäß Anspruch 1, **dadurch gekennzeichnet, dass** die Unregelmäßigkeiten mit einer Schutzschicht versehen werden.

8. Verfahren gemäß Anspruch 7, **dadurch gekennzeichnet, dass** die Schutzschicht Epoxy enthält.

9. Verfahren gemäß Anspruch 7, **dadurch gekennzeichnet, dass** die Schutzschicht Silikone enthält.

10. Verfahren gemäß Anspruch 1 oder 2, **dadurch gekennzeichnet, dass** die Unregelmäßigkeiten innerhalb einer Zeitspanne von höchstens einem Jahr nach dem Gießen des Betons und vor der Ingebrauchnahme des Längsspaltenrostelements (1) hergestellt werden.

11. Verfahren gemäß Anspruch 1 oder 2, **dadurch gekennzeichnet, dass** die Unregelmäßigkeiten innerhalb einer Zeitspanne von höchstens einem Monat nach dem Gießen des Betons und vor der Ingebrauchnahme des Längsspaltenrostelements (1) hergestellt werden.

12. Verfahren gemäß Anspruch 1 oder 2, **dadurch gekennzeichnet, dass** die Unregelmäßigkeiten innerhalb einer Zeitspanne von höchstens zwei Tagen nach dem Gießen des Betons und vor der Ingebrauchnahme des Längsspaltenrostelements (1) hergestellt werden.

## Revendications

1. Procédé pour la réalisation de caillebotis préfabriqués en béton pour des planchers d'étables destinés à du bétail et analogues, qui sont constitués principalement par des traverses (2) reliées les unes aux autres, ce procédé consistant à former le caillebotis (1) en versant du béton dans un moule approprié et en laissant ensuite prendre le béton, par lequel, au cours du processus de prise et avant la mise en service des caillebotis, on réalise des irrégularités dans au moins une partie de la surface supérieure des caillebotis, **caractérisé en ce que** les irrégularités sont principalement constituées par des rainures (7) et **en ce que** les irrégularités sont réalisées après la prise partielle du béton et après le retrait du caillebotis (1) du moule.

2. Procédé selon la revendication 1, **caractérisé en ce qu'**on réalise les irrégularités en traitant les caillebotis (1) qui ont été soumis à une prise partielle.

3. Procédé selon la revendication 1, **caractérisé en ce que** les irrégularités sont constituées principalement par des rainures (7) qui s'étendent principalement parallèlement aux traverses (2).

4. Procédé selon la revendication 3, **caractérisé en ce que** les rainures (7) sont réalisées au moyen d'un dispositif à cames qui sont reliées en mobilité à un essieu mené.

5. Procédé selon la revendication 1, **caractérisé en ce que**, avant le versement du béton, on procure des renforcements appropriés dans le moule.

6. Procédé selon la revendication 1, **caractérisé en ce que** les irrégularités sont réalisées jusqu'à une certaine distance des bords des traverses (2).

7. Procédé selon la revendication 1, **caractérisé en ce que** les irrégularités sont munies d'une couche de protection.

8. Procédé selon la revendication 7, **caractérisé en ce que** la couche de protection contient une résine époxy.

9. Procédé selon la revendication 7, **caractérisé en ce que** la couche de protection contient des silicones.

10. Procédé selon la revendication 1 ou 2, **caractérisé en ce que** les irrégularités sont réalisées dans un laps de temps de une année au maximum après le versement du béton et avant la mise en service du caillebotis (1).

11. Procédé selon la revendication 1 ou 2, **caractérisé en ce que** les irrégularités sont réalisées dans un laps de temps de un mois au maximum après le versement du béton et avant la mise en service du caillebotis (1).

12. Procédé selon la revendication 1 ou 2, en ce que les irrégularités sont réalisées dans un laps de temps de deux jours au maximum après le versement du béton et avant la mise en service du caillebotis (1).
